# EUROPÄISCHE PATENTSCHRIFT

(11) **EP 1 922 368 B1**
(45) Veröffentlichungstag und Bekanntmachung des Hinweises auf die Patenterteilung: **21.12.2016**
(21) Anmeldenummer: 06776872.1
(22) Anmeldetag: 16.08.2006
(51) Int. Cl.: C09C 1/40, B82Y 30/00, C09D 7/12, C08K 3/22, C08K 9/06

(54) **BESCHICHTUNGSMASSEN ENTHALTEND MISCHOXID-NANOPARTIKEL BESTEHEND AUS 50-99,9 GEW% AL2O3 UND 0,1-50 GEW% OXIDEN VON ELEMENTEN DER I. ODER II. HAUPTGRUPPE DES PERIODENSYSTEMS**
COATING MATERIALS CONTAINING MIXED OXIDE NANOPARTICLES
MATIERES D'ENDUCTION CONTENANT DES NANOPARTICULES D'OXYDE MIXTE

(30) Priorität: 18.08.2005 DE 102005039436; 10.05.2006 DE 102006021705
(43) Veröffentlichungstag der Anmeldung: 21.05.2008
(73) Patentinhaber: Clariant Finance (BVI) Limited, Road Town, Tortola (VG)
(72) Erfinder: RÖSCH, Norbert, 86368 Gersthofen (DE); KRENDLINGER, Ernst, 86316 Friedberg (DE); HEINZE, Anja, 65239 Hochheim/Main (DE); ZEISBERGER, Karl, 86368 Gersthofen (DE)
(74) Vertreter: Ricker, Mathias
(86) Internationale Anmeldenummer: PCT/EP2006/008066
(87) Internationale Veröffentlichungsnummer: WO 2007/020063

(56) Entgegenhaltungen:
- WO-A-01/64796
- WO-A-03/055939
- WO-A-2004/069400
- DE-B- 1 068 836
- MONCEAU D ET AL: "Surface Segregation and Morphology of Mg-Doped alpha-Alumina Powders" JOURNAL OF THE EUROPEAN CERAMIC SOCIETY, ELSEVIER SCIENCE PUBLISHERS, BARKING, ESSEX, GB, Bd. 15, Nr. 9, 1995, Seiten 851-858, XP004047319 ISSN: 0955-2219

## Beschreibung

Bekannt sind Nanopartikel enthaltende Beschichtungsmittel, wobei die Nanopartikel mittels Sol-Gel-Technik hergestellt werden durch hydrolytische (Co-) Kondensation von Tetraethoxysilan (TEOS) mit weiteren Metallalkoxyden in Abwesenheit von organischen und/oder anorganischen Bindemitteln. Aus DE 199 24 644 ist bekannt, dass die Sol-Gel-Synthese auch im Medium durchgeführt werden kann. Bevorzugt eingesetzt werden strahlenhärtende Formulierungen. Alle mittels Sol-Gel-Prozess hergestellten Materialien zeichnen sich aber durch geringe Festkörpergehalte an anorganischer und organischer Substanz, durch erhöhte Mengen des Kondensationsproduktes (in der Regel Alkohole), durch die Anwesenheit von Wasser und durch begrenzte Lagerstabilität aus.

Einen Fortschritt stellen die hochtemperaturbeständigen, reaktiven Metalloxidpartikel dar, hergestellt durch hydrolytische Kondensation von Metallalkoxiden auf der Oberfläche von nanoskaligen anorganischen Partikeln in Gegenwart von reaktiven Bindemitteln. Die Temperaturbeständigkeit der ausreagierten Formulierungen wird erreicht durch die heterogene Copolymerisation von reaktiven Gruppen des Mediums mit gleichartigen reaktiven Gruppen des Bindemittels. Nachteilig ist hier die Unvollständigkeit der heterogenen Copolymerisation, bei der nicht alle reaktiven Gruppen auf der Oberfläche der Partikel in die Copolymerisation eintreten. Grund sind hauptsächlich sterische Hinderungen. Bekanntermaßen führen jedoch die nicht ausreagierten Gruppen zu unerwünschten Folgereaktionen, die Verfärbungen, Versprödungen oder vorzeitigen Abbau hervorrufen können. Das gilt besonders für Hochtemperaturanwendungen. Auch das in der DE 198 46 660 beschriebene Verfahren führt zu nicht lagerstabilen Systemen bedingt durch das saure Medium in Gegenwart des Kondensationsprodukts (in der Regel Alkohole).

Bekannt sind auch nanoskalige oberflächenmodifizierte Teilchen (Degussa Aerosil® R 7200), die durch Kondensation von Metalloxiden mit Silanen in Abwesenheit eines Bindemittels und somit in Abwesenheit von starken Scherkräften entstanden sind, wie sie in viskosen Medien bei Rührgeschwindigkeiten von ≥ 10 m/ s wirken. Diese Aerosile besitzen aus diesem Grund größere Teilchen als die eingesetzten Rohstoffe, ihre Opazität ist deutlich höher und ihre Wirksamkeit ist geringer als die Wirkung der in WO 00/22052 beschriebenen Teilchen und der daraus hergestellten Lacke.

WO 2004/069400 A1 offenbart ein Verfahren zur Herstellung oberflächenmodifizierter nanoskaliger Kolloidpartikel. DE 1068836 A1 beschreibt spinellartige Verbindungen als Pigmente und Füllstoffe.

Aufgabe der Erfindung ist es, die Nachteile des Standes der Technik zu beseitigen und lagerungs- und eigenschaftsstabile Beschichtungsmassen bereitzustellen, die speziell hergestellte nanoskalige anorganische Teilchen enthalten.

Gegenstand der Erfindung sind Beschichtungsmassen enthaltend Mischoxid-Nanopartikel bestehend aus 50 - 99,9 Gew.-% Aluminiumoxid und 0,1 - 50 Gew.-% Oxiden von Elementen der I. oder II. Hauptgruppe des Periodensystems. Das Aluminiumoxid in diesen Mischoxiden liegt zum überwiegenden Teil in der rhomboedrischen α-Modifikation (Korund) vor und die Mischoxid-Nanopartikel sind mit einem Silan oder Siloxan an der Oberfläche modifiziert. Die Mischoxide gemäß der vorliegenden Erfindung haben vorzugsweise eine Kristallitgröße von kleiner 1 µm, bevorzugt kleiner 0,2 µm und besonders bevorzugt zwischen 0,001 und 0,09 µm. Erfindungsgemäße Partikel dieser Größenordnung sollen im folgenden als Mischoxid-Nanopartikel bezeichnet werden.

Die erfindungsgemäßen Mischoxid-Nanopartikel können nach unterschiedlichen, im folgenden beschriebenen Verfahren hergestellt werden. Diese Verfahrensbeschreibungen beziehen sich auf die Herstellung nur von reinen Aluminiumoxid-Partikeln, es versteht sich aber von selbst, dass bei all diesen Verfahrensvarianten neben Al-enthaltenden Ausgangsverbindungen auch solche anwesend sein müssen, um die erfindungsgemäßen Mischoxide zu bilden. Hierfür kommen vor allem infrage vorzugsweise die Chloride, aber auch die Oxide, Oxidchloride, Carbonate, Sulfate oder andere geeignete Salze. Die Menge an solchen Oxidbildnern ist so bemessen, dass die fertigen Nanopartikel die zuvor genannten Mengen an Oxid MeO enthalten.

Ganz allgemein geht man bei der Herstellung der erfindungsgemäßen Nanopartikel von größeren Agglomeraten dieser Mischoxide aus, die anschließend auf die gewünschte Partikelgröße desagglomeriert werden. Diese Agglomerate können hergestellt werden durch nachfolgend beschriebene Verfahren.

Solche Agglomerate lassen sich beispielsweise durch verschiedene chemische Synthesen herstellen. Hierbei handelt es sich meist um Fällungsreaktionen (Hydroxidfällung, Hydrolyse metallorganischer Verbindungen) mit anschließender Kalzinierung. Dabei werden häufig Kristallisationskeime zugesetzt, um die Umwandlungstemperatur zum α-Aluminiumoxid herabzusetzen. Die so erhaltenen Sole werden getrocknet und dabei in ein Gel überführt. Die weitere Kalzinierung findet dann bei Temperaturen zwischen 350°C und 650°C statt. Für die Umwandlung zum α-Al₂O₃ muss dann bei Temperaturen um 1000°C geglüht werden. Die Verfahren sind ausführlich in DE 199 22 492 beschrieben.

Ein weiterer Weg ist das Aerosolverfahren. Dabei werden die gewünschten Moleküle aus chemischen Reaktionen eines Precursorgases oder durch schnelle Abkühlung eines übersättigten Gases erhalten. Die Bildung der Partikel erfolgt entweder durch Kollision oder die ständige im Gleichgewicht befindliche Verdampfung und Kondensation von Molekülclustern. Die neu gebildeten Teilchen wachsen durch weitere Kollision mit Produktmolekülen (Kondensation) und/oder Partikeln (Koagulation). Ist die Koagulationsrate größer als jene der Neubildung bzw. des Wachstums, entstehen Agglomerate von kugelförmigen Primärpartikeln.

Flammenreaktoren stellen eine auf diesem Prinzip basierende Herstellungsvariante dar. Nanopartikel werden hier durch die Zersetzung von Precursormolekülen in der Flamme bei 1500 °C - 2500°C gebildet. Als Beispiele seien die Oxidationen von TiCl₄; SICl₄ und Si₂O(CH₃)₆ in Methan/O₂-Flammen erwähnt, die zu TiO₂- und SiO₂-Partikeln führen. Bei Einsatz von AlCl₃ konnte bislang nur die entsprechende Tonerde erzeugt werden. Flammenreaktoren werden heute großtechnisch für die Synthese von Submikropartikeln wie Ruß, Pigment-TiO₂, Kieselsäure und Tonerde eingesetzt.

Kleine Partikel können auch mit Hilfe von Fliehkraft, Druckluft, Schall, Ultraschall und weiteren Methoden auch aus Tropfen gebildet werden. Die Tropfen werden dann durch direkte Pyrolyse oder durch in situ Reaktionen mit anderen Gasen in Pulver umgewandelt. Als bekannte Verfahren sind die Sprüh- und Gefriertrocknung zu erwähnen. Bei der Spraypyrolyse werden Precursortropfen durch ein Hochtemperaturfeld (Flamme, Ofen) transportiert, was zu einer raschen Verdampfung der leicht flüchtigen Komponente führt oder die Zersetzungsreaktion zum gewünschten Produkt initiiert. Die gewünschten Partikel werden in Filtern gesammelt. Als Beispiel kann hier die Herstellung von BaTiO₃ aus einer wässrigen Lösung von Bariumacetat und Titanlactat genannt werden.

Durch Mahlung kann ebenfalls versucht werden, Korund zu zerkleinern und dabei Kristallite im nano-Bereich zu erzeugen. Die besten Mahlergebnisse können mit Rührwerkskugelmühlen in einer Nassmahlung erzielt werden. Dabei müssen Mahlperlen aus einem Material verwendet werden, das eine größere Härte als Korund hat.

Ein weiterer Weg zur Herstellung von Korund bei niedriger Temperatur stellt die Umwandlung von Aluminiumchlorohydrat dar. Dieses wird dazu ebenfalls mit Impfkeimen, bevorzugt aus Feinstkorund oder Hämatit, versetzt. Zur Vermeidung von Kristallwachstum müssen die Proben bei Temperaturen um 700°C bis maximal 900°C kaliziniert werden. Die Dauer der Kalzinierung beträgt hierbei mindestens vier Stunden. Nachteil dieser Methode ist deshalb der große Zeitaufwand und die Restmengen an Chlor im Aluminiumoxid. Die Methode wurde ausführlich beschrieben in Ber. DKG 74 (1997) No. 11/12, S. 719 - 722.

Aus diesen Agglomeraten müssen die Nanopartikel freigesetzt werden. Dies geschieht vorzugsweise durch Mahlen oder durch Behandlung mit Ultraschall. Erfindungsgemäß erfolgt diese Desagglomeration in Gegenwart eines Lösungsmittels und eines Silans oder Siloxans zur Modifizierung der Oberfläche, das während des Mahlprozesses die entstehenden aktiven und reaktiven Oberflächen durch eine chemische Reaktion oder physikalische Anlagerung absättigt und somit die Reagglomeration verhindert. Das Nano-Mischoxid bleibt als kleines Partikel erhalten. Es ist auch möglich, das Silan oder Siloxan für die Modifizierung der Oberfläche nach erfolgter Desagglomeration zuzugeben.

Vorzugsweise geht man bei der erfindungsgemäßen Herstellung der Mischoxide von Agglomeraten aus, die entsprechend den Angaben in Ber. DKG 74 (1997) No. 11/12, S. 719 - 722 hergestellt werden, wie zuvor beschrieben.

Ausgangspunkt hierbei ist Aluminiumchlorohydrat, dem die Formel Al₂(OH)ₓCl_{y} zukommt, wobei x eine Zahl von 2,5 bis 5,5 und y eine Zahl von 3,5 und 0,5 ist und die Summe von x und y stets 6 beträgt. Dieses Aluminiumchlorohydrat wird als wässrige Lösung mit Kristallisationskeimen vermischt, anschließend getrocknet und dann einer thermischen Behandlung (Kalzinierung) unterzogen.

Bevorzugt geht man dabei von ca. 50 %igen wässrigen Lösungen aus, wie sie kommerziell verfügbar sind. Eine solche Lösung wird mit Kristallisationskeimen versetzt, die die Bildung der α-Modifikation des Al₂O₃ fördern. Insbesondere bewirken solche Keime eine Herabsetzung der Temperatur für die Bildung der α-Modifikation bei der nachfolgenden thermischen Behandlung. Als Keime kommen bevorzugt infrage feinstdisperser Korund, Diaspor oder Hämatit. Besonders bevorzugt nimmt man feinstdisperse α- Al₂O₃-Keime mit einer mittleren Teilchengröße von weniger als 0,1 µm. Im Allgemeinen reichen 2 bis 3 Gew.-% an Keimen bezogen auf das entstehende Aluminiumoxid aus.

Diese Ausgangslösung enthält zusätzlich noch Oxidbildner, um die Oxide MeO in dem Mischoxid zu erzeugen. Hierfür kommen vor allem infrage die Chloride der Elemente der I. und II. Hauptgruppe des Periodensystems, insbesondere die Chloride der Elemente Ca und Mg, aber darüber hinaus auch andere lösliche oder dispergierbare Salze wie Oxide, Oxichloride, Carbonate oder Sulfate. Die Menge an Oxidbildner ist so bemessen, dass die fertigen Nanopartikel 0,01 bis 50 Gew.-% des Oxids Me enthalten. Die Oxide der I. und II. Hauptgruppe können als separate Phase neben dem Aluminiumoxid vorliegen oder mit diesem echte Mischoxide wie z.B. Spinelle etc. bilden. Der Begriff "Mischoxide" im Rahmen dieser Erfindung ist so zu verstehen, dass er beide Typen mit einschließt.

Diese Suspension aus Aluminiumchlorohydrat, Keimen und Oxidbildnern wird dann bis zum Trocknen eingedampft und einer thermischen Behandlung (Kalzinierung) unterworfen. Diese Kalzinierung erfolgt in hierfür geeigneten Vorrichtungen, beispielsweise in Durchschub-, Kammer-, Rohr-, Drehrohr- oder Mikrowellenöfen oder in einem Wirbelschichtreaktor. Gemäß einer Variante des erfindungsgemäßen Verfahrens kann man auch so vorgehen, dass man die wässrige Suspension aus Aluminiumchlorohydrat, Oxidbildnern und Keimen ohne vorherige Entfernung des Wassers direkt in die Kalzinierungsapparatur einspritzt.

Die Temperatur für die Kalzinierung soll 1400°C nicht übersteigen. Die untere Temperaturgrenze ist abhängig von der gewünschten Ausbeute an nanokristallinem Mischoxid, vom gewünschten Restchlorgehalt und dem Gehalt an Keimen. Die Bildung der Nanopartikel setzt bereits bei ca. 500°C ein, um jedoch den Chlorgehalt niedrig und die Ausbeute an Nanopartikeln hoch zu halten, wird man jedoch bevorzugt bei 700 bis 1100°C, insbesondere bei 1000 bis 1100°C arbeiten.

Es hat sich überraschend herausgestellt, dass für die Kalzinierung im Allgemeinen 0,5 bis 30 Minuten, vorzugsweise 0,5 bis 10, insbesondere 2 bis 5 Minuten ausreichen. Bereits nach dieser kurzen Zeit kann unter den oben angegebenen Bedingungen für die bevorzugten Temperaturen eine ausreichende Ausbeute an Nanopartikeln erreicht werden. Man kann jedoch auch entsprechend den Angaben in Ber. DKG 74 (1997) No. 11/12, S. 722 4 Stunden lang bei 700°C oder 8 Stunden lang bei 500°C kalzinieren.

Bei der Kalzinierung fallen Agglomerate in Form von nahezu kugelförmigen Nanopartikeln an. Diese Partikel bestehen aus Al₂O₃ und MeO. Der Gehalt an MeO wirkt als Inhibitor für das Kristallwachstum und hält die Kristallitgröße klein. Dadurch unterscheiden sich die Agglomerate, wie sie durch die oben beschriebene Kalzinierung erhalten werden, deutlich von den Partikeln, wie sie bei dem in WO 2004/069 400 beschriebenen Verfahren eingesetzt werden, wo es sich um gröbere, in sich homogene Teilchen und nicht um Agglomerate von bereits vorgefertigten Nanopartikeln handelt.

Zur Gewinnung von Nanopartikeln werden die Agglomerate vorzugsweise durch Nassmahlung in einem Lösungsmittel zerkleinert, beispielsweise in einer Attritormühle, Perlmühle oder Rührwerksmühle. Dabei erhält man Mischoxid-Nanopartikel, die eine Kristallitgröße von kleiner 1 µm, bevorzugt kleiner 0,2 µm, besonders bevorzugt zwischen 0,001 und 0,9 µm aufweisen. So erhält man beispielsweise nach einer sechsstündigen Mahlung eine Suspension von Nanopartikeln mit einem d90-Wert von ungefähr 50 nm. Eine andere Möglichkeit der Desagglomeration ist die Beschallung mit Ultraschall.

Bei der Modifizierung der Oberfläche dieser Nanopartikel mit Silanen oder Siloxanen, gibt es zwei Möglichkeiten. Gemäß der ersten bevorzugten Variante kann man die Desagglomeration in Gegenwart von Silanen oder Siloxanen vornehmen, beispielsweise indem man das Silan oder Siloxan während des Mahlens in die Mühle gibt. Eine zweite Möglichkeit besteht darin, dass man zuerst die Agglomerate der Nanopartikel zerstört und anschließend die Nanopartikel, vorzugsweise in Form einer Suspension in einem Lösungsmittel, mit dem Silan oder Siloxan behandelt.

Als Lösungsmittel für die Desagglomeration kommen in Frage sowohl Wasser als auch übliche Lösungsmittel, vorzugsweise solche, die auch in der Lackindustrie genommen werden, wie zum Beispiel C₁-C₄-Alkohole, insbesondere Methanol, Ethanol oder Isopropanol, Aceton, Tetrahydrofuran, Butylacetat. Erfolgt die Desagglomeration in Wasser, sollte eine anorganische oder organische Säure, beispielsweise HCl, HNO₃, Ameisensäure oder Essigsäure zugegeben werden, um die entstehenden Nanopartikel in der wässrigen Suspension zu stabilisieren. Die Menge an Säure kann 0,1 bis 5 Gew.-%, bezogen auf das Mischoxid, betragen. Aus dieser wässrigen Suspension der sauer modifizierten Nanopartikel wird dann bevorzugt die Kornfraktion mit einem Teilchendurchmesser von weniger als 20 nm durch Zentrifugieren abgetrennt. Anschließend wird bei erhöhter Temperatur, beispielsweise bei ca. 100°C das Beschichtungsmittel, ein Silan oder Siloxan, zugegeben. Die so behandelten Nanopartikel fallen aus, werden abgetrennt und zu einem Pulver getrocknet, beispielsweise durch Gefriertrocknung.

Als geeignete Beschichtungsmittel kommen hierbei Silane oder Siloxane oder deren Mischungen infrage.

Als Silane bzw. Siloxane kommen infrage Verbindungen der Formeln
a)

   R [-Si (R'R")-O-]ₙ Si (R'R")-R'"

   oder

   cyclo-[-Si (R'R")-O-]ᵣSi (R'R")-O-

   worin
   R, R', R", R"'- gleich oder verschieden voneinander einen Alkylrest mit 1 - 18 C-Atomen oder einen Phenylrest oder einen Alkylphenyl- oder einen Phenylalkylrest mit 6 - 18 C-Atomen oder einen Rest der allgemeinen Formel -(CₘH₂ₘ-O)ₚ-C_{q}H_{2q+1} oder einen Rest der allgemeinen Formel -CₛH₂ₛY oder einen Rest der allgemeinen Formel -XZₜ₋₁,
   n eine ganze Zahl mit der Bedeutung 1 ≤ n ≤ 1000, bevorzugt 1 ≤ n ≤ 100,
   m eine ganze Zahl 0 ≤ m ≤ 12 und
   p eine ganze Zahl 0 ≤ p ≤ 60 und
   q eine ganze Zahl 0 ≤ q ≤ 40 und
   r eine ganze Zahl 2 ≤ r ≤ 10 und
   s eine ganze Zahl 0 ≤ s ≤ 18 und
   Y eine reaktive Gruppe, beispielsweise α,β-ethylenisch ungesättigte Gruppen, wie (Meth)Acryloyl-, Vinyl- oder Allylgruppen, Amino-, Amido-, Ureido-, Hydroxyl-, Epoxy-, Isocyanato-, Mercapto-, Sulfonyl-, Phosphonyl-, Trialkoxylsilyl-, Alkyldialkoxysilyl-, Dialkylmonoalkoxysilyl-, Anhydrid- und/oder Carboxylgruppen, Imido-, Imino-, Sulfit-, Sulfat-, Sulfonat-, Phosphin-, Phosphit-, Phosphat-, Phosphonatgruppen und
   X ein t-funktionelles Oligomer mit
   t eine ganze Zahl 2 ≤ t ≤ 8 und
   Z wiederum einen Rest

   R [-Si(R'R")-O-]ₙSi(R'R")-R"'

   oder

   cyclo-[-Si (R'R")-O-]ᵣSi(R'R")-O-

   darstellt, wie vorstehend definiert.
   Das t-funktionelle Oligomer X ist dabei bevorzugt ausgewählt aus:
   Oligoether, Oligoester, Oligoamid, Oligourethan, Oligoharnstoff, Oligoolefin, Oligovinylhalogenid, Oligovinylidendihalogenid, Oligoimin, Oligovinylalkohol, Ester, Acetal oder Ether von Oligovinylalkohol, Cooligomere von Maleinsäureanhydrid, Oligomere von (Meth)acrylsäure, Oligomere von (Meth)acrylsäureestern, Oligomere von (Meth)acrylsäureamiden, Oligomere von (Meth)acrylsäureimiden, Oligomere von (Meth)acrylsäurenitril, besonders bevorzugt Oligoether, Oligoester, Oligourethane.

   Beispiele für Reste von Oligoethern sind Verbindungen vom Typ -(CₐH₂ₐ-O)_{b}-CₐH₂ₐ- bzw. O-(CₐH₂ₐ-O)_{b}-CₐH₂ₐ-O mit 2 ≤ a ≤ 12 und 1 ≤ b ≤ 60, z. B. ein Diethylenglykol-, Triethylenglykol- oder Tetraethylenglykol-Rest, ein Dipropylenglykol-, Tripropylenglykol-, Tetrapropylenglykol-Rest, ein Dibutylenglykol-, Tributylenglykol- oder Tetrabutylenglykol-Rest. Beispiele für Reste von Oligoestern sind Verbindungen vom Typ -C_{b}H_{2b}-(C(CO)CₐH₂ₐ-(CO)O-C_{b}H_{2b}-)_{c}-bzw. -O-C_{b}H_{2b}-(C(CO)CₐH₂ₐ-(CO)O-C_{b}H_{2b}-)_{c}-O- mit a und b unterschiedlich oder gleich 3 ≤ a ≤ 12, 3 ≤ b ≤ 12 und 1 ≤ c ≤ 30, z.B. ein Oligoester aus Hexandiol und Adipinsäure.
b) Organosilane des Typs

   (RO)₃Si(CH₂)ₘ-R'

   R = Alkyl, wie Methyl-, Ethyl-, Propyl-
   m = 0,1 - 20
   R' = Methyl-, Phenyl,
      -C₄F₉; OCF₂-CHF-CF₃, -C₆F₁₃, -O-CF₂-CHF₂
      -NH₂, -N₃, SCN, -CH=CH₂, -NH-CH₂-CH₂-NH₂,
      -N-(CH₂-CH₂-NH₂)₂
      -OOC(CH₃)C = CH₂
      -OCH₂-CH(O)CH₂
      -NH-CO-N-CO-(CH₂)₅
      -NH-COO-CH₃, -NH-COO-CH₂-CH₃, -NH-(CH₂)₃Si(OR)₃
      -Sₓ-(CH₂)₃)Si(OR)₃
      -SH
      -NR'R"R'" (R' = Alkyl, Phenyl; R" = Alkyl, Phenyl; R"' = H, Alkyl, Phenyl, Benzyl,
      C₂H₄NR"" mit R"" = A, Alkyl und R""' = H, Alkyl).

   Beispiele für Silane der oben definierten Art sind z. B. Hexamethyldisiloxan, Octamethyltrisiloxan, weitere homologe und isomere Verbindungen der Reihe

   SiₙOₙ₋₁(CH₃)₂ₙ₊₂,

   wobei
   n eine ganze Zahl 2 ≤ n ≤ 1000 ist, z. B. Polydimethylsiloxan 200® fluid (20 cSt).
   Hexamethyl-cyclo-trisiloxan, Octamethyl-cyclo-tetrasiloxan, weitere homologe und isomere Verbindungen der Reihe

      (Si-O)ᵣ(CH₃)₂ᵣ,

      wobei
      r eine ganze Zahl 3 ≤ r ≤ 12 ist,

   Dihydroxytetramethydisiloxan, Dihydroxyhexamethyltrisiloxan, Dihydroxyoctamethyltetrasiloxan, weitere homologe und isomere Verbindungen der Reihe

   HO-[(Si-O)ₙ(CH₃)₂ₙ]-Si(CH₃)₂-OH

   oder

   HO-[(Si-O)ₙ(CH₃)₂ₙ]-[Si-O)ₘ(C₆H₅)₂ₘ]-Si(CH₃)₂-OH,

   wobei
   m eine ganze Zahl 2 ≤ m ≤ 1000 ist,
   bevorzugt sind die α,ω-Dihydroxypolysiloxane, z. B. Polydimethylsiloxan (OH-Endgruppen, 90-150 cST) oder Polydimethylsiloxan-co-diphenylsiloxan, (Dihydroxy-Endgruppen, 60 cST).

   Dihydrohexamethytrisiloxan, Dihydrooctamethyltetrasiloxan weitere homologe und isomere Verbindungen der Reihe

   H-[(Si-O)ₙ(CH₃)₂ₙ]-Si(CH₃)₂-H,

   wobei
   n eine ganze Zahl 2 ≤ n ≤ 1000 ist, bevorzugt sind die α,ω-Dihydropolysiloxane, z. B. Polydimethylsiloxan (Hydrid-Endgruppen, Mₙ = 580).

   Di(hydroxypropyl)hexamehtyltrisiloxan, Dihydroxypropyl)octamethyltetrasiloxan, weitere homologe und isomere Verbindungen der Reihe HO-(CH₂)ᵤ[(Si-O)n(CH₃)₂(CH₂)ᵤ-OH, bevorzugt sind die α,ω-Dicarbinolpolysiloxane mit 3 ≤ u ≤ 18, 3 ≤ n ≤ 1000 oder ihre Polyether-modifizierten Nachfolgeverbindungen auf Basis der Ethylenoxid (EO) und Propylenoxid (PO) als Homo- oder Mischpolymer HO-(EO/PO)ᵥ-(CH₂)ᵤ[(Si-O)ₜ(CH₃)₂ₜ]-Si(CH₃)₂(CH₂)ᵤ-(EO/PO)ᵥ-OH, bevorzugt sind α,ω-Di(carbinolpolyether)-polysiloxane mit 3 ≤ n ≤ 1000, 3 ≤ u ≤ 18, 1 ≤ v ≤ 50.
   Statt α,ω-OH-Gruppen kommen ebenfalls die entsprechenden difunktionellen Verbindungen mit Epoxy-, Isocyanato-, Vinyl-, Allyl- und Di(meth)acryloylgruppen zum Einsatz, z. B. Polydimethylsiloxan mit Vinylendgruppen (850 - 1150 cST) oder TEGORAD 2500 der Fa. Tego Chemie Service.
   Es kommen auch die Veresterungsprodukte von ethoxylierten/propoxylierten Trisiloxanen und höheren Siloxanen mit Acrylsäurecopolymeren und/oder Maleinsäurecopolymeren als modifizierende Verbindung infrage, z. B. BYK Silclean 3700 der Fa. Byk Chemie oder TEGO® Protect 5001 der Fa. Tego Chemie Service GmbH.
   Statt α,ω-OH-Gruppen kommen ebenfalls die entsprechenden difunktionellen Verbindungen mit -NHR"" mit R"" = H oder Alkyl zum Einsatz, z. B. die allgemein bekannten Aminosiliconöle der Firmen Wacker, Dow Corning, Bayer, Rhodia etc. zum Einsatz, die statistisch auf der Polysiloxankette verteilte (Cyclo)-Alkylaminogruppen oder (Cyclo)-Alkyliminogruppen auf ihrer Polymerkette tragen.
c) Organosilane des Typs (RO)₃Si(CₙH₂ₙ₊₁) und (RO)₃Si(CₙH₂ₙ₊₁), wobei
   - R: ein Alkyl, wie z. B. Methyl, Ethyl-, n-Propyl-, i-Propyl, Butyl-
   - n: 1 bis 20.

   Organosilane des Typs R'x(RO)ySi(CnH2n+1) und (RO)3Si(CnH2n+1), wobei
   - R: ein Alkyl, wie z. B. Methyl-, Ethyl-, n-Propyl-, i-Propyl-, Butyl-,
   - R': ein Alkyl, wie z. B. Methyl-, Ethyl-, n-Propyl-, i-Propyl-, Butyl-,
   - R': ein Cycloalkyl
   - n: eine ganze Zahl von 1 - 20
   - x+y: 3
   - x: 1 oder 2
   - y: 1 oder 2
d) Organosilane des Typs (RO)₃Si(CH₂)ₘ-R', wobei
   - R: ein Alkyl, wie z. B. Methyl-, Ethyl-, Propyl-,
   - m: eine Zahl zwischen 0,1 - 20
   - R': Methyl-, Phenyl, -C₄F₉; OCF₂-CHF-CF₃, -C₆F₁₃, -O-CF₂-CHF₂, -NH₂, -N₃, -SCN, -CH=CH₂, -NH-CH₂-CH₂-NH₂, -N-(CH₂-CH₂-NH₂)₂, -OOC(CH₃)C = CH₂, -OCH₂-CH(O)CH₂, -NH-CO-N-CO-(CH₂)₅, -NH-COO-CH₃, -NH-COO-CH₂-CH₃, -NH-(CH₂)₃Si(OR)₃, -Sₓ-(CH₂)₃)Si(OR)₃, -SH-NR'R"R"' (R¹ = Alkyl, Phenyl; R" = Alkyl, Phenyl; R"' = H, Alkyl, Phenyl, Benzyl, C₂H₄NR""R""' mit R"" = A, Alkyl und R""' = H, Alkyl) bedeutet.

Bevorzugte Silane sind die im Folgenden aufgeführten Silane:
Triethoxysilan, Octadecyltimethoxisilan,
3-(Trimethoxysilyl)-propylmethacrylate, 3-(Trimethoxysilyl)-propylacrylate,
3-(Trimethoxysilyl)-methylmethacrylate, 3-(Trimethoxysilyl)-methylacrylate,
3-(Trimethoxysilyl)-ethylmethacrylate, 3-(Trimethoxysilyl)-ethylacrylate,
3-(Trimethoxysilyl)-pentylmethacrylate, 3-(Trimethoxysilyl)-pentylacrylate,
3-(Trimethoxysilyl)-hexylmethacrylate, 3-(Trimethoxysilyl)-hexylacrylate,
3-(Trimethoxysilyl)-butylmethacrylate, 3-(Trimethoxysilyl)-butylacrylate,
3-(Trimethoxysilyl)-heptylmethacrylate, 3-(Trimethoxysilyl)-heptylacrylate,
3-(Trimethoxysilyl)-octylmethacrylate, 3-(Trimethoxysilyl)-octylacrylate,
Methyltrimethoxysilane, Methyltriethoxysilane, Propyltrimethoxisilane,
Propyltriethoxisilane, Isobutyltrimethoxisilane, Isobutyltriethoxysilane,
Octyltrimethoxysilane, Octyltriethoxysilane, Hexadecyltrimethoxysilane,
Phenyltrimethoxysilane, Phenyltriethoxysilane,
Tridecafluoro-1,1,2,2-tetrahydrooctyltriethoxysilane,
Tetramethoxysilane, Tetraethoxysilane, Oligomeric tetraethoxysilane (DYNASIL® 40 Fa. Degussa), Tetra-n-propoxysilane,
3-Glycidyloxypropyltrimethoxysilane, 3-Glycidyloxypropyltriethoxysilane, 3-Methacryloxylpropyltrimethoxysilane, Vinyltrimethoxysilane, Vinyltriethoxysilane, 3-Mercaptopropyltrimethoxysilane,
3-Aminopropyltriethoxysilane, 3-Aminopropyltrimethoxysilane, 2-Aminoethyl-3-aminopropyltrimethoxysilane, Triaminofunctional propyltrimethoxysilane (DYNASYLAN® TRIAMINO Fa. Degussa), N-(n-Butyl-3-aminopropyltrimethoxysilane, 3-Aminopropylmethyldiethoxysilane.

Die Beschichtungsmittel, die Silane oder Siloxane werden vorzugsweise in molaren Verhältnissen Mischoxid-Nanopartikel zu Silan von 1:1 bis 10:1 zugegeben. Die Menge an Lösungsmittel beim Desagglomerieren beträgt im Allgemeinen 80 bis 90 Gew.-%, bezogen auf die Gesamtmenge an Mischoxid-Nanopartikel und Lösungsmittel.

Die Desagglomerierung durch Mahlen und gleichzeitige Modifizierung mit dem Beschichtungsmittel erfolgt vorzugsweise bei Temperaturen von 20 bis 150°C, besonders bevorzugt bei 20 bis 90°C.

Erfolgt die Desagglomeration durch Mahlen, wird die Suspension anschließend von den Mahlperlen abgetrennt.

Nach der Desagglomeration kann die Suspension zur Vervollständigung der Reaktion noch bis zu 30 Stunden erhitzt werden. Abschließend wird das Lösungsmittel abdestilliert und der verbleibende Rückstand getrocknet. Es kann auch vorteilhaft sein, die modifizierten Mischoxid-Nanopartikel im Lösungsmittel zu belassen und die Dispersion für weitere Anwendungen zu verwenden.

Es ist auch möglich, die Mischoxid-Nanopartikel in den entsprechenden Lösungsmitteln zu suspendieren und die Reaktion mit dem Beschichtungsmittel nach der Desagglomeration in einem weiteren Schritt durchzuführen.

Die so hergestellten, an der Oberfläche modifizierten Mischoxid-Nanopartikel können in beliebige Beschichtungsmassen wie zum Beispiel keramische Beschichtungen, Eloxal Beschichtungen oder bevorzugt in Lacke eingearbeitet werden. Diese Beschichtungsmassen, enthalten außerdem übliche und bekannte Bindemittel, beispielsweise solche, wie im Folgenden beschrieben:
Lackbindemittel für ein- und mehrkomponentige Polymersysteme können folgende aus der Lacktechnik bekannten Komponenten beinhalten:
   Alkyd - Melamin Einbrennlacke, ein- bis mehrfunktionelle Acrylate, beispielsweise Butylacrylat, Ethylhexylacrylat, Norbornylacrylat, Butandioldiacrylat, Hexandioldiacrylat, Dipropylenglykoldiacrylat, Tripropylenglykoldiacrylat, Trimethylolpropantriacrylat, Trimethylolpropan-triethoxytriacrylat, Pentaerythritoltetraethoxytriacrylat, Pentaerythritoltetraethoxy-tetraacrylat, Polyetheracrylat, Polyetheracrylat, Polyurethanacrylate, z.B. Craynor^{®} CN 925, CN 981 der Cray Valley Kunstharze GmbH, Ebecryl^{®} EB 1290 der UCB GmbH, Laromer 8987 der BASF AG, Photomer® 6019 oder Photomer^{®} 6010 der Fa. Cognis,

Polyesteracrylate, z.B. Craynor^{®} CN 292 der Cray Valley Kunstharze GmbH, Laromer^{®} LR 8800 der BASF AG, Ebecryl^{®} EB 800 der UCB GmbH, Photomer^{®} 5429 F und Photomer^{®} 5960 F der Fa. Cognis,
Epoxyacrylate, z.B. Laromer^{®} EA 81 der BASF AG, Ebecryl^{®} EB 604 der UCB GmbH, Craynor^{®} CN104D80 der Cray Valley Kunstharze GmbH,
dendritische Polyester/etheracrylate der Fa. Perstorp Speciality Chemicals AG oder der Fa. Bayer AG,
Polyurethanpolymere und ihre Vorstufen in Form der Polyisocyanate, Polyole, Polyurethanprepolymere, als verkapptes Prepolymer und als ausreagierte Polyurethane in Form einer Schmelze oder Lösung. Im Einzelnen sind dies:
Polyole in Form von Polyethern, z.B. Polyethylenglykol 400, Voranol^{®} P 400 und Voranol^{®} CP 3055 der Dow Chemicals, Polyestern, z.B. Lupraphen^{®} 8107, Lupraphen^{®} 8109 der Elastorgan^{®} GmbH, Desmophen^{®} 670, Desmophen^{®} 1300 der Bayer AG, Oxyester^{®} T 1136 der Degussa AG, Alkydharze, z.B. Worléekyd^{®} C 625 der Worlée Chemie GmbH,
Polycarbonaten, z.B. Desmophen^{®} C 200, hydroxyhaltigen Polyacrylaten, z.B. Desmophen^{®} A 365 der Bayer AG,
Polyisocyanate, z.B. Desmodur^{®} N 3300, Desmodur^{®} VL, Desmodur^{®} Z 4470, Desmodur^{®} IL oder Desmodur^{®} L 75 der Bayer AG, Vestanat^{®} T 1890 L der Degussa AG, Rodocoat^{®} WT 2102 der Rhodia Syntech GmbH, Polyurethanprepolymere, z.B. Desmodur^{®} E 4280 der Bayer AG, Vestanat^{®} EP-U 423 der Degussa AG,
PMMA und weitere Poly(meth)alkyl-acrylate, z.B. Plexisol^{®} P 550 und Degalan^{®} LP 50/01 der Degussa AG,
Polyvinylbutyral und andere Polyvinylacrylate, z.B. Mowital^{®} B 30 HH der Clariant GmbH,
Polyvinylacetat und seine Copolymere, z.B. Vinnapas^{®} B 100/20 VLE der Wacker-Chemie GmbH.

Bei allen Polymeren sind sowohl die aliphatischen als auch die aromatischen Varianten ausdrücklich eingeschlossen. Das Bindemittel kann auch so gewählt sein, dass es mit dem Silan das zur Funktionalisierung dient identisch ist.

Bevorzugt haben die Bindemittel ein Molgewicht von 100 bis 800 g/mol. Der Gehalt an Bindemittel in der gesamten Beschichtungsmasse beträgt vorzugsweise 80 bis 99, insbesondere 90 bis 99 Gew.-%.

Die erfindungsgemäßen Beschichtungsmassen können darüber hinaus noch weitere Zusatzstoffe enthalten, wie sie in der Lacktechnik üblich sind, beispielsweise Reaktivverdünner, Lösemittel und Colöser, Wachse, Mattierungsmittel, Gleitmittel, Entschäumer, Entlüfter, Verlaufmittel, Thixotropiermittel, Verdicker, anorganische und organische Pigmente, Füllstoffe, Haftvermittler, Korrosionsinhibitoren, Korrosionsschutpigmente, UV-Stabilisatoren, HALS-Verbindungen, Radikalfänger, Antistatika, Netzmittel und Dispergiermittel und/oder die je nach Art der Härtung notwendigen Katalysatoren, Cokatalysatoren, Initiatoren, Radikalbildnern, Photoinitiatoren, Photosensibilisatoren etc. Als weitere Zusatzstoffe kommen auch Polyethylenglykol und andere Wasserretensionsmittel, PE-Wachse, PTFE-Wachse, PP-Wachse, Amidwachse, FT-Paraffine, Montanwachse, gepfropfte Wachse, natürliche Wachse, makro- und mikrokristalline Paraffine, polare Polyolefinwachse, Sorbitanester, Polyamide, Polyolefine, PTFE, Netzmittel oder Silikate in Frage.

Anhand der folgenden Beispiele soll der erfindungsgemäße Gegenstand näher erläutert werden, ohne die mögliche Vielfalt einzuschränken. Beispiele

### Beispiel 1:

Eine 50 %ig wässrige Lösung von Aluminiumchlorohydrat wurde mit Magnesiumchlorid versetzt, dass nach der Kalzinierung das Verhältnis von Aluminiumoxid zu Magnesiumoxid 99,5 : 0,5 % betrug. Außerdem wurden der Lösung 2 % Kristallisationskeime einer Suspension aus Feinstkorund zugesetzt. Nachdem die Lösung durch Rühren homogenisiert wurde, erfolgt die Trocknung in einem Rotationsverdampfer. Das feste Aluminiumchlorohydrat-Magnesiumchlorid-Gemisch wurde in einer Reibschale zerkleinert, wobei ein grobes Pulver entstand.

Das Pulver wurde in einem Drehrohrofen bei 1050°C kalziniert. Die Kontaktzeit in der heißen Zone betrug maximal 5 min. Es wurde ein weißes Pulver erhalten, dessen Kornverteilung dem Aufgabegut entsprach.

Eine Röntgenstrukturanalyse zeigt, dass überwiegend α-Aluminiumoxid vorliegt.

Die Bilder der durchgeführten REM-Aufnahme (Rasterelektronenmikroskop) zeigten Kristallite im Bereich 10 - 80 nm (Abschätzung aus REM-Aufnahme), die als Agglomerate vorliegen. Der Restchlorgehalt betrug nur wenige ppm.

In einem weiteren Schritt wurden 40 g dieses mit Magnesiumoxid dotierten Korundpulvers in 160 g Isopropanol suspendiert. Der Suspension wurden 40 g Trimethoxy-octylsilan zugegeben und einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 mm auf. Nach drei Stunden wurde die Suspension von den Mahlperlen abgetrennt und unter Rückfluss für weitere 4 h gekocht. Anschließend wurde das Lösungsmittel abdestilliert und der zurückbleibende feuchte Rückstand im Trockenschrank bei 110°C weitere 20 h getrocknet.

### Beispiel 2:

40 g des Oxidgemischs (mit MgO dotierter Korund) aus Beispiel 1 wurde in 160 g Methanol suspendiert und in einer vertikalen Rührwerkskugelmühle der Fa. Netzsch (Typ PE 075) desagglomeriert. Nach 3 h wurde die Suspension von den Perlen abgetrennt und in einen Rundkolben mit Rückflusskühler überführt. Der Suspension wurden 40 g Trimethoxy-octylsilan zugegeben und unter Rückfluss auf 2 h erhitzt. Nach Entfernung des Lösungsmittels wurde das beschichtete Oxidgemisch isoliert und im Trockenschrank für weitere 20 h bei 110°C getrocknet. Das so erhaltene Produkt ist identisch zur Probe aus Beispiel 1.

### Beispiel 3:

40 g des Oxidgemischs (mit MgO dotierter Korund) aus Beispiel 1 wurde in 160 g Methanol suspendiert und in einer vertikalen Rührwerkskugelmühle der Fa. Netzsch (Typ PE 075) desagglomeriert. Nach 2 h wurden 20 g 3-(Trimethoxysilyl)-propyl-methacrylat (Dynasilan Memo; Degussa) zugegeben und die Suspension für weitere 2 h in der Rührwerkskugelmühle desagglomeriert. Anschließend wurde die Suspension von den Perlen abgetrennt und in einen Rundkolben mit Rückflusskühler überführt. Für weitere 2 h wurde unter Rückfluss erhitzt, bevor das Lösungsmittel abdestilliert wurde.

### Beispiel 4:

40 g des Oxidgemischs (mit MgO dotierter Korund) aus Beispiel 1 wurde in 160 g Aceton suspendiert und in einer vertikalen Rührwerkskugelmühle der Fa. Netzsch (Typ PE 075) desagglomeriert. Nach 2 h wurden 20 g Aminopropyl-trimethoxysilan (Dynasilan Ammo; Degussa) zugegeben und die Suspension für weitere 2 h in der Rührwerkskugelmühle desagglomeriert. Anschließend wurde die Suspension von den Perlen abgetrennt und in einen Rundkolben mit Rückflusskühler überführt. Für weitere 2 h wurde unter Rückfluss erhitzt, bevor das Lösungsmittel abdestilliert wurde.

### Beispiel 5:

40 g des Oxidgemischs (mit MgO dotierter Korund) aus Beispiel 1 wurde in 160 g Aceton suspendiert und in einer vertikalen Rührwerkskugelmühle der Fa. Netzsch (Typ PE 075) desagglomeriert. Nach 2 h wurden 20 g Glycidyl-trimethoxysilan (Dynasilan Glymo; Degussa) zugegeben und die Suspension für weitere 2 h in er Rückwerkskugelmühle desagglomeriert. Anschließend wurde die Suspension von den Perlen abgetrennt und in einen Rundkolben mit Rückflusskühler überführt. Für weitere 2 h wurde unter Rückfluss erhitzt, bevor das Lösungsmittel abdestilliert wurde.

### Beispiel 6:

40 g des Oxidgemischs (mit MgO dotierter Korund) aus Beispiel 1 wurde in 160 g n-Butanol suspendiert und in einer vertikalen Rührwerkskugelmühle der Fa. Netzsch (Typ PE 075) desagglomeriert. Nach 2 h wurde ein Gemisch aus 5 g Aminopropyl-trimethoxysilan (Dynasilan Ammo; Degussa) und 15 g Octyltriethoxysilan zugegeben und die Suspension für weitere 2 h in der Rührwerkskugelmühle desagglomeriert. Die Suspension bleibt über Wochen stabil ohne Anzeichen einer Sedimentation des beschichteten Mischoxids.

### Anwendungsbeispiele

Die beschichteten Mischoxide aus den Beispielen wurden in diversen Lacksystemen auf ihre Abriebsfestigkeit, Härte, Glanz und Kratzfestigkeit getestet. Die Prüfungen erfolgen in einem 2-Komponenten-Polyurethan-Lacksystem, einem 100%-UV-Lacksystem und einen 1-Komponenten-Einbrennlacksystem.

### I. 2-Komponenten-Polyurethan-Lacksystem

Die Proben aus den Beispielen 1-3 wurden in die 1. Komponente bzw. in ein Lösemittel des Lacksystems eindispergiert.

### Abrieb

Mittels Luftdruckpistole wurden die Lackproben auf spezielle Glasplatten appliziert. Mit dem Taber-Abraser wurden nach verschiedenen Umdrehungen die Auswaagen bestimmt und somit der Abrieb berechnet.

| Auswaagen [mg] | nach 20 Umdrehungen | nach 50 Umdrehungen | nach 100 Umdrehungen |
|---|---|---|---|
| Lack ohne Additive | 0,4 | 2,1 | 5,6 |
| 2 % Mischoxid Nanopartikel / Bsp. 3. | 0,0 | 1,0 | 3,9 |
| 4 % Mischoxid Nanopartikel / Bsp. 3 | 0,0 | 2,8 | 3,8 |
| 2 % Mischoxid Nanopartikel / Bsp. 1 od. 2 | 0,5 | 1,1 | 3;8 |
| 4 % Mischoxid Nanopartikel / Bsp. 1 od. 2 | 0,5 | 1,7 | 4,1 |
| 10 % Mischoxid Nanopartikel / Bsp. 1 od. 2 | 0,8 | 2,2 | 4,8 |

### Glanz

Die Lacke wurden mit 60 µm Nassfilmschichtdicke auf Glasplatten appliziert und mittels dem micro-gloss von BYK-Gardner bei einem Winkel von 60° der Glanz bestimmt.

| | Glanz / 60° |
|---|---|
| ohne Additiv | 144 |
| 2 % Mischoxid Nanopartikel / Bsp. 3 | 133 |
| 4 % Mischoxid Nanopartikel / Bsp. 3 | 129 |
| 4 % Mischoxid Nanopartikel / Bsp. 1 od. 2 | 126 |
| 6 % Mischoxid Nanopartikel / Bsp. 1 od. 2 | 120 |
| 10 % Mischoxid Nanopartikel / Bsp. 1 od. 2 | 110 |

### Bleistifthärte

Von den Lackfilmen auf den Glasplatten wurde mittels der Bestimmung der Bleistifthärte nach Wolff-Wilborn die Härte bestimmt.

| | Härte |
|---|---|
| ohne:Additiv | F |
| 10 % Mischoxid Nanopartikel/ Bsp. 1 od. 2 | F |
| 6 % Mischoxid Nanopartikel / Bsp. 1 od. 2 | F |
| 4 % Mischoxid Nanopartikel / Bsp. 1 od. 2 | H |
| 4 % Mischoxid Nanopartikel / Bsp. 3 | H |
| 4 % Mischoxid Nanopartikel / Bsp. 3 | H |

| weich |
|---|
| 6B |
| 5B |
| 4B |
| 3B |
| 2B |
| B |
| HB |
| F |
| H |
| 2H |
| 3H |
| 4H |
| 5H |
| 6H |
| 7H |
| 8H |
| 9H |
| hart |

### II. 100 %-UV-Lacksystem

Die Proben aus den Beispielen 1-3 wurden in das Lacksystem eindispergiert.

### Abrieb

Mittels Luftdruckpistole wurden die Lackproben auf spezielle Glasplatten appliziert. Mit dem Taber-Abraser wurden nach verschiedenen Umdrehungen die Auswaagen bestimmt und somit der Abrieb berechnet.

| Auswaage [mg] | 50 Umdrehungen | 100 Umdrehungen | 200 Umdrehungen |
|---|---|---|---|
| ohne Additive | 1,5 | 3,9 | 10,5 |
| 2 % Mischoxid Nanopartikel/Bsp. 3 | 0,9 | 2,5 | 7,1 |
| Mischoxid Nanopartikel/Bsp. 1 od. 2 | 1,3 | 3,2 | 9,0 |

### Glanz

Die Lacke wurden mit 60 µm Nassfilmschichtdicke auf Glasplatten appliziert und mittels dem micro-gloss von BYK-Gardner bei einem Winkel von 60° der Glanz bestimmt.

| | Glanz |
|---|---|
| ohne Additive | 139 |
| 2 % Mischoxid Nanopartikel / Bsp. 3 | 137 |
| 2 % Mischoxid Nanopartikel / Bsp. 1 od. 2 | 120 |

### Bleistifthärte

Von den Lackfilmen auf den Glasplatten wurde mittels der Bleistifthärte nach Wolff-Wilborn die Härte bestimmt.

| | Härte | weich |
|---|---|---|
| ohne Additive | H | ↓ |
| 2 % Mischoxid Nanopartikel / Bsp. 3 | H | |
| 2 % Mischoxid Nanopartikel / Bsp. 1 od. 2 | 2H | hart |

### III. 1-Komponenten-Einbrennlacksystem

Die Proben aus den Beispielen 4 bis 6 wurden in den Lack bzw. in ein Lösemittel des Lacksystems eindispergiert.

### Abrieb

Mittels Luftdruckpistole wurden die Lackproben auf spezielle Glasplatten appliziert. Mit dem Taber-Abraser wurden nach verschiedenen Umdrehungen die Auswaagen bestimmt und somit der Abrieb berechnet.

| Auswaagen [mg] | nach 100 Umdrehungen | nach 200 Umdrehungen |
|---|---|---|
| Lack ohne Additive | 10,4 | 23,9 |
| 2 % Mischoxid Nanopartikel / Bsp. 4 | 7,0 | 19,0 |
| 2 % Mischoxid Nanopartikel / Bsp. 5 | 7,5 | 21,2 |
| 5 % Mischoxid Nanopartikel / Bsp. 4 | 7,4 | 18,4 |
| 5 % Mischoxid Nanopartikel / Bsp. 5 | 5,6 | 12,3 |

| Auswaagen [mg] | nach 100 Umdrehungen | nach 200 Umdrehungen |
|---|---|---|
| Lack ohne Additive | 16,0 | 31,6 |
| 2 % Mischoxid Nanopartikel / Bsp. 6 | 12,0 | 25,4 |
| 4 % Mischoxid Nanopartikel / Bsp. 6 | 11,3 | 23,8 |

### Glanz

Die Lacke wurden mit 60 µm Nassfilmschichtdicke auf Glasplatten appliziert und mittels dem micro-gloss von BYK-Gardner bei einem Winkel von 60° der Glanz bestimmt.

| | Glanz |
|---|---|
| ohne Additive | 154 |
| 2 % Mischoxid Nanopartikel / Bsp. 4 | 150 |
| 2 % Mischoxid Nanopartikel / Bsp. 5 | 138 |
| 5 % Mischoxid Nanopartikel / Bsp. 4 | 146 |
| 5 % Mischoxid Nanopartikel / Bsp. 5 | 123 |

| | Glanz |
|---|---|
| ohne Additive | 154 |
| 2 % Mischoxid Nanopartikel / Bsp. 6 | 142 |
| 4 % Mischoxid Nanopartikel / Bsp. 6 | 130 |

### Ritzhärteprüfung

Die Lacke wurden mit 60 µm Nassfilmschichtdicke auf verzinnten Weißblechen appliziert und die Ritzhärte über die Anzahl der Hübe bestimmt.

| | 100 g Auflagegewicht |
|---|---|
| ohne Additive | 9 |
| 2 % Mischoxid Nanopartikel / Bsp. 4 | 26 |
| 2 % Mischoxid Nanopartikel / Bsp. 5 | 16 |
| 5 % Mischoxid Nanopartikel / Bsp. 4 | 12 |
| 5 % Mischoxid Nanopartikel / Bsp. 5 | 21 |

| | 300g Auflagegewicht |
|---|---|
| ohne Additive | 5 |
| 2 % Mischoxid Nanopartikel / Bsp. 6 | 7 |
| 4 % Mischoxid Nanopartikel / Bsp. 6 | 6 |

## Patentansprüche

1. Beschichtungsmassen enthalten Mischoxid-Nanopartikel bestehend aus 50 - 99,9 Gew.-% Aluminiumoxid das überwiegend in der rhomboedrischen alpha-Modifikation vorliegt, und 0,1 - 50 Gew.-% Oxiden von Elementen der I. oder II. Hauptgruppe des Periodensystems, und wobei die Mischoxid-Nanopartikel mit einem Silan oder Siloxan an der Oberfläche modifiziert sind.

2. Beschichtungsmassen nach Anspruch 1, **dadurch gekennzeichnet, dass** sie Mischoxid-Nanopartikel enthalten, die durch Desagglomeration von aus Mischoxid-Nanopartikeln bestehenden Agglomeraten durch Mahlen in einem Lösungsmittel erhalten werden.

3. Beschichtungsmassen nach Anspruch 1, **dadurch gekennzeichnet, dass** sie mit einem Beschichtungsmittel an der Oberfläche modifizierte Nanopartikel enthalten, die durch Desagglomeration von aus Mischoxid-Nanopartikeln bestehenden Agglomeraten durch Mahlen in einem Lösungsmittel und gleichzeitige Behandlung mit dem oberflächenmodifizierenden Beschichtungsmittel erhalten werden.

4. Beschichtungsmassen nach Anspruch 1, **dadurch gekennzeichnet, dass** sie mit einem Beschichtungsmittel an der Oberfläche modifizierte Mischoxid-Nanopartikel enthalten, die durch Desagglomeration von aus Mischoxid-Nanopartikel bestehenden Agglomeraten durch Mahlen in einem Lösungsmittel und anschließende Behandlung mit dem oberflächenmodifizierenden Beschichtungsmittel erhalten werden.

5. Beschichtungsmassen nach einem der Ansprüche 1 bis 4, **dadurch gekennzeichnet, dass** es sich um einen Lack handelt.

## Claims

1. Coating compositions comprising mixed oxide nanoparticles, comprising 50%-99.9% by weight of aluminum oxide, wherein the aluminum oxide is predominantly present in the rhombohedral alpha-modification, and 0.1%-50% by weight of oxides of elements of main group I or II of the periodic table of the elements, and wherein the mixed oxide nanoparticles are modified on the surface by a silane or siloxane.

2. Coating compositions as claimed in claim 1 **characterized in that** said coating compositions comprise mixed oxide nanoparticles which are formed by deagglomeration of agglomerates of the mixed oxide nanoparticles by grinding the mixed oxide nanoparticles in a solvent.

3. Coating compositions as claimed in claim 1 **characterized in that** said coating compositions comprise nanoparticles which are modified on the surface with a coating material, and wherein the surface modified nanoparticles are formed by deagglomeration of agglomerates comprising mixed oxide nanoparticles by grinding in a solvent and simultaneous treatment with the surface modifying coating material.

4. Coating compositions as claimed in claim 1 **characterized in that** said coating compositions comprise mixed oxide nanoparticles which are modified on the surface with a coating material, and wherein the surface modified mixed oxide nano-particles are formed by deagglomeration of agglomerates comprising the mixed oxide nanoparticles by grinding in a solvent and simultaneous treatment with the surface modifying coating material.

5. Coating compositions as claimed in any of claims 1 to 4 **characterized in that** said coating composition is a varnish.

## Revendications

1. Compositions de revêtement comprenant des nanoparticules d'oxydes mixtes, comprenant de 50 % à 99,9 % en poids d'oxyde d'aluminium, dans lesquelles l'oxyde d'aluminium est présent de manière prédominant dans la modification rhomboédrique alpha, et de 0,1 % à 50 % en poids d'oxydes d'éléments appartenant au groupe I ou II principal de la Table périodique des éléments, et dans lesquelles les nanoparticules d'oxydes mixtes sont modifiées en surface par un silane ou un siloxane.

2. Compositions de revêtement selon la revendication 1 **caractérisées en ce que** lesdites compositions de revêtement comprennent des nanoparticules d'oxydes mixtes qui sont formées par désagglomération d'agglomérats de nanoparticules d'oxydes mixtes par broyage des nanoparticules d'oxydes mixtes dans un solvant.

3. Compositions de revêtement selon la revendication 1 **caractérisées en ce que** lesdites compositions de revêtement comprennent des nanoparticules qui sont modifiées en surface par un matériau de revêtement, et dans lesquelles les nanoparticules modifiées en surface sont formées par désagglomération d'agglomérats comprenant des nanoparticules d'oxydes mixtes par broyage dans un solvant et traitement simultané avec le matériau de revêtement de modification de surface.

4. Compositions de revêtement selon la revendication 1 **caractérisées en ce que** lesdites compositions de revêtement comprennent des nanoparticules d'oxydes mixtes qui sont modifiées en surface par un matériau de revêtement, et dans lesquelles les nanoparticules d'oxydes mixtes modifiées en surface sont formées par désagglomération d'agglomérats comprenant des nanoparticules d'oxydes mixtes par broyage dans un solvant et traitement simultané avec le matériau de revêtement de modification de surface.

5. Compositions de revêtement selon l'une quelconque des revendications 1 à 4 **caractérisées en ce que** ladite composition de revêtement est un vernis.
